# EUROPEAN PATENT APPLICATION

(11) **EP 2 431 773 A2**
(43) Date of publication of application: **21.03.2012**
(21) Application number: 10014912.9
(22) Date of filing: 23.11.2010
(51) Int. Cl.: G02B 5/00, G02B 21/08, G02B 27/14, G02B 27/28

(54) **Digital microscope with coaxial light output**

(30) Priority: 15.09.2010 TW 99131182
(71) Applicant: AnMo Electronics Corporation, Taipei (TW)
(72) Inventor: Wu, Paul Neng-Wei, Hsinchu City 300 (TW)
(74) Representative: Goddar, Heinz J.

(57) **Abstract**

A digital microscope (100) is disclosed including: an image sensing circuit (110) having an image sensing area (112) thereon; a first object lens (120) aligned with the image sensing area (112) along an axis (102); a luminance device (130) positioned outside the axis (102) for emitting light toward a direction that is not coaxial with the axis (102); a light redirector (140) positioned outside the axis (102) for redirecting the light emitted from the luminance device (130); and a beam splitter (150) positioned on the axis (102) for changing the direction of light from the light redirector (140) to provide an output light that is outputted substantially along the axis (102) and coaxial with the axis (102); wherein the first object lens (120) is positioned between the image sensing area (112) and the beam splitter (150).

## Description

The present disclosure generally relates to a digital microscope according to the pre-characterizing clause of claim 1.

Digital microscope has a variety of applications, and the advent of hand-held digital microscopes has further expanded the possible applications fields and improved the convenience of use.

In operations, however, light condition between a hand-held digital microscope and a target object to be inspected often affects the imaging quality of the digital microscope. Due to the restrictions on the angle of light radiating onto the target object and the strength of light reflected from the target object, conventional hand-held digital microscopes are unable to reveal details of the surface of the target object. Thus, it is difficult for the observer to obtain the details or fine structures on the surface of the target object.

This in mind, the present invention aims at providing a digital microscope with coaxial light output.

This is achieved by a digital microscope according to claim 1. The dependent claims pertain to corresponding further developments and improvements.

As will be seen more clearly from the detailed description following below, the claimed digital microscope includes a light redirector positioned outside an axis defined by an image sensing circuit and a first object lens to redirect light emitted from a luminance device positioned outside the axis to a beam splitter positioned on the axis.

In the following, the invention is further illustrated by way of example, taking reference to the accompanying drawings. Thereof

Fig. 1 is a simplified schematic diagram of a hand-held digital microscope in accordance with a first embodiment,

Fig. 2 is a simplified schematic diagram of a hand-held digital microscope in accordance with a second embodiment,

Fig. 3 is a simplified schematic diagram of a hand-held digital microscope in accordance with a third embodiment,

Fig. 4 is a simplified schematic diagram of a hand-held digital microscope in accordance with a fourth embodiment,

Fig. 5 is a simplified schematic diagram of a hand-held digital microscope in accordance with a fifth embodiment,

Fig. 6 is a simplified schematic diagram of a hand-held digital microscope in accordance with a sixth embodiment,

Fig. 7 is a simplified schematic diagram of a hand-held digital microscope in accordance with a seventh embodiment, and

Fig. 8 is a simplified schematic diagram of a hand-held digital microscope in accordance with an eighth embodiment.

Reference will now be made in detail to embodiments of the invention, which are illustrated in the accompanying drawings. The same reference numbers may be used throughout the drawings to refer to the same or like parts or components.

Certain terms are used throughout the description and following claims to refer to particular components. As one skilled in the art will appreciate, vendors may refer to a component by different names. This document does not intend to distinguish between components that differ in name but not in function. In the following description and in the claims, the terms "include" and "comprise" are used in an open-ended fashion, and thus should be interpreted to mean "include, but not limited to ...."

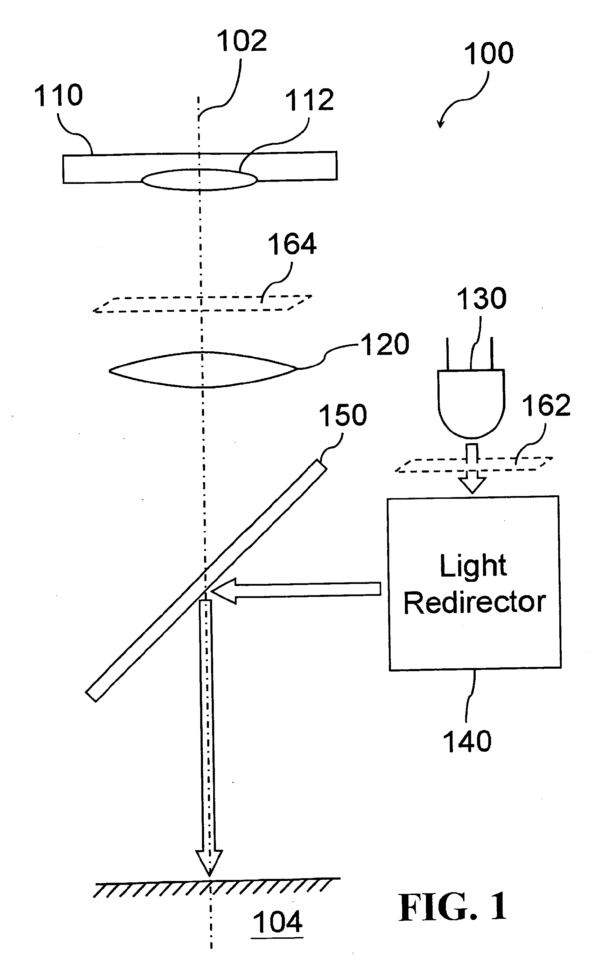

Fig. 1 shows a simplified schematic diagram of a hand-held digital microscope 100 in accordance with a first exemplary embodiment. In this embodiment, the digital microscope 100 has a hollow tubular casing (not shown). The digital microscope 100 comprises an image sensing circuit 110, an object lens 120, a luminance device 130, a light redirector 140, and a beam splitter 150 inside the casing. The image sensing circuit 110 comprises one or more complementary metal oxide semiconductor (CMOS) sensors, charge coupled device (CCD) sensors, CMOS/CCD hybrid sensors, charge injection device (CID) sensors, or other photo sensing components for sensing images of the surface of a target object 104 to generate corresponding digital or analog image signals. As shown, the image sensing circuit 110 has an image sensing area 112 formed thereon and the object lens 120 is aligned with the image sensing area 112, so that light reflected from the surface of the target object 104 can be transmitted to the sensors in the image sensing circuit 110.

In one embodiment, the image sensing circuit 110 not only transmits generated digital or analog image signals to a coupled computer, monitoring device, or inspection system (not shown) through a predetermined transmission interface (such as USB or IEEE 1394 interface), but also receives electricity required for the operations of the digital microscope 100 from the computer, monitoring device, or inspection system through the predetermined transmission interface.

In the digital microscope 100, the object lens 120, the image sensing area 112 of the image sensing circuit 110, and the beam splitter 150 are arranged along an axis 102, and the object lens 120 is positioned between the image sensing area 112 and the beam splitter 150. In implementations, the object lens 120 and the image sensing area 112 can be configured to have an adjustable interval between them to increase the magnification options for the digital microscope 100. For example, a telescopic tube assembly may be installed inside the casing of the digital microscope 100 so that the magnification or focus of the digital microscope 100 can be adjusted by moving the object lens 120 or the image sensing circuit 110 along the axis 102 inside the telescopic tube assembly. In another embodiment, one or more guiding components (such as guiding rod, guiding bar, spiral track, thread or other similar structures) may be employed to engage with the object lens 120 or the image sensing circuit 110 by cooperating with appropriate connecting structures to allow the object lens 120 or the image sensing area 112 to move along the axis 102 by sliding or rotating on the guiding component.

In the digital microscope 100, the luminance device 130 is positioned outside the axis 102, so the optical routing from the surface of the target object 104 to the image sensing circuit 110 would not be affected by the luminance device 130. Moreover, since the digital microscope 100 is a hand-held device, large volume and width is not suitable for the design of the digital microscope 100 in consideration of convenience of use and holding. Therefore, the space inside the casing of the digital microscope 100 is very limited. If the luminance device 130 is arranged to emit light directly toward the beam splitter 150, more space inside the casing is required and thus resulting in increased width to the digital microscope 100. Thus, in the embodiment of Fig. 1, the luminance device 130 is configured to emit light toward a direction that is not coaxial with the axis 102 and not directly toward the beam splitter 150. That is, light directly emitted from the luminance device 130 is neither coaxial with the axis 102, nor directly transmitted to the beam splitter 150. Such configuration reduces the required width for the casing of the digital microscope 100. In practice, the luminance device 130 may be implemented with LED devices to reduce the power consumption.

The light redirector 140 is also positioned outside the axis 102 so as not to affect the optical routing from the surface of the target object 104 to the image sensing circuit 110. The light redirector 140 redirects light emitted from the luminance device 130 to the beam splitter 150. In one embodiment, the light redirector 140 may be implemented with one or more optical fibers.

The beam splitter 150 changes the light direction of light transmitted from the light redirector 140 to provide an output light that is substantially coaxial with the axis 102 and substantially outputted along the axis 102 for illuminating the surface of the target object 104. The beam splitter 150 also allows light reflected from the surface of the target object 104 to enter the image sensing circuit 110 along the axis 102.

Since the optical routing of light transmission from the digital microscope 100 to the surface of the target object 104, and the optical routing of light reflection from the surface of the target object 104 to the image sensing circuit 110 are both along the axis 102, the digital microscope 100 would be able to reveal details of the surface of the target object 104 and obtain great imaging definition and stereo visual effect for the image details related to roughness or smoothness of the surface of the target object 104. As a result, the observer can know better about the details and fine structures on the surface of the target object 104, such as scratches, water traces, or other minute textures of the surface. Additionally, since the digital microscope 100 has a coaxial light output, it is also useful in the applications where coaxial projection illumination is needed for inspecting. For example, the digital microscope 100 may be applied to inspect an object behind a deep and narrow hole or spacing.

In implementations, one or more guiding components (such as guiding rod, guiding bar, spiral track, thread or other similar structures) may be employed to engage with the beam splitter 150 through appropriate connecting structures to allow the beam splitter 150 to move along the axis 102 by sliding on the guiding component. When the beam splitter 150 is moved along the axis 102, the light redirector 140 should be moved or rotated correspondingly.

As can be appreciated from the foregoing descriptions that the light emitted from the luminance device 130 would be converted into an output light that is coaxial with the axis 102 and substantially outputted along the axis 102. Accordingly, most of light emitted from the luminance device 130 can be effectively utilized to illuminate the target object 104. Such configuration greatly increases the light utilization efficiency of the luminance device 130, and thus the required number of light emitting components can be reduced. For example, in the embodiments where the luminance device 130 is implemented with LED devices, a single LED is sufficient for the operations of the digital microscope 100, so the power consumption of the digital microscope 100 can be effectively reduced,

In another embodiment, a polarizer sheet 162 is arranged on an optical routing between the luminance device 130 and the beam splitter 150, and a polarizer sheet 164 is arranged on an optical routing between the beam splitter 150 and the image sensing area 112 along the axis 102, wherein the polarizer sheet 162 has a polarization angle substantially perpendicular to a polarization angle of the polarizer sheet 164. The polarizer sheet 162 may be positioned between the luminance device 130 and the light redirector 140, or between the light redirector 140 and the beam splitter 150. The polarizer sheet 164 may be positioned between the beam splitter 150 and the object lens 120, or between the object lens 120 and the image sensing area 112. In implementations, the polarizer sheet 162 can be configured as movable or rotatable through appropriate connecting mechanism (such as a pivot structure) so as to allow the polarizer sheet 162 to be moved outside the optical routing between the luminance device 130 and the beam splitter 150. Similarly, the polarizer sheet 162 can be configured as movable or rotatable using appropriate connecting mechanism (such as a pivot structure), so that the polarizer sheet 164 can be moved to outside the axis 102.

When the polarizer sheet 162 is not positioned on the optical routing between the luminance device 130 and the beam splitter 150, or the polarizer sheet 164 is not positioned on the axis 102, images of the target object 104 would be sensed by the image sensing circuit 110 mainly based on light that is emitted by the luminance device 130 and then reflected from the surface of the target object 104 along the axis 102.

When the polarizer sheet 162 is positioned on the optical routing between the luminance device 130 and the beam splitter 150, and the polarizer sheet 164 is positioned on the axis 102, images of the target object 104 would be sensed by the image sensing circuit 110 mainly based on environmental light that is originated from other ambient devices and then diffused from the surface of the target object 104 along the axis 102.

By moving or rotating the polarizer sheet 162 and /or the polarizer sheet 164, the observer can compare images obtained under different light conditions, thereby having better comparative understanding for the surface of the target object 104 in terms of image details related to roughness or smoothness.

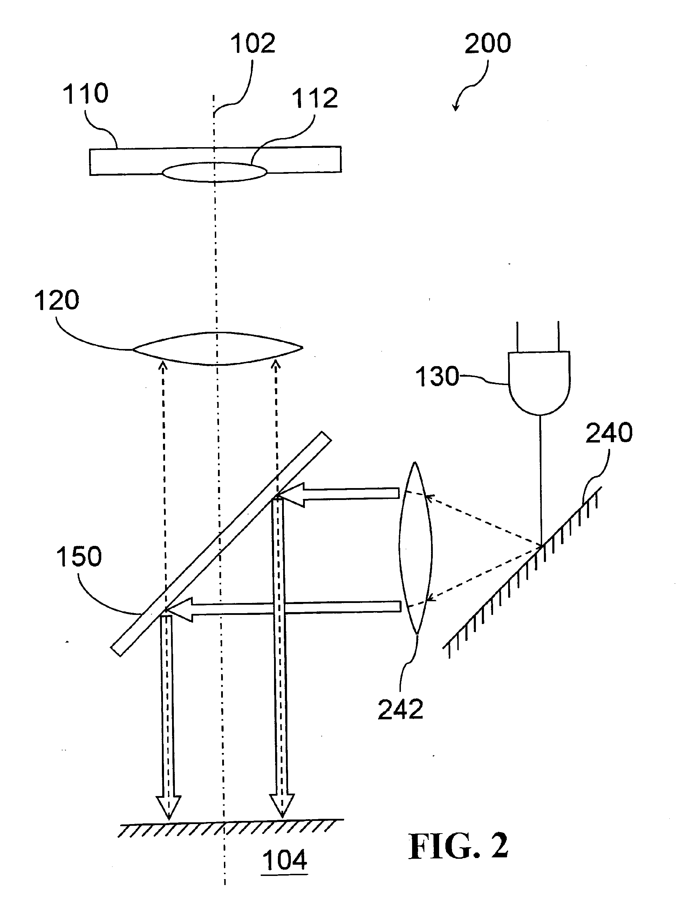

Fig. 2 shows a simplified schematic diagram of a hand-held digital microscope 200 in accordance with a second exemplary embodiment. In the embodiment shown in Fig. 2, a light redirector 240 of the digital microscope 200 is implemented with a reflective surface, such as a mirror surface or a surface with high reflectivity. In addition, a convex lens 242 is arranged in one side of the beam splitter 150, i.e., between the light redirector 240 and the beam splitter 150. When light generated from the luminance device 130 is transmitted to the light redirector 240, the light would be reflected to the convex lens 242, and then transmitted toward the beam splitter 150. In another embodiment, the convex lens 242 converts light reflected from the light redirector 240 into substantially parallel light and then transmits to the beam splitter 150, so that the light transmitted from the beam splitter 150 toward the target object 104 is parallel light outputted substantially along the axis 102.

The polarizer sheet 162 of Fig. 1 described previously may be arranged between the luminance device 130 and the light redirector 240, between the light redirector 240 and the convex lens 242, or between the convex lens 242 and the beam splitter 150 in the embodiment of Fig. 2. The arrangement of the polarizer sheet 164 in the digital microscope 200 is similar to that in the digital microscope 100, and thus the descriptions will not be repeated for the sake of brevity.

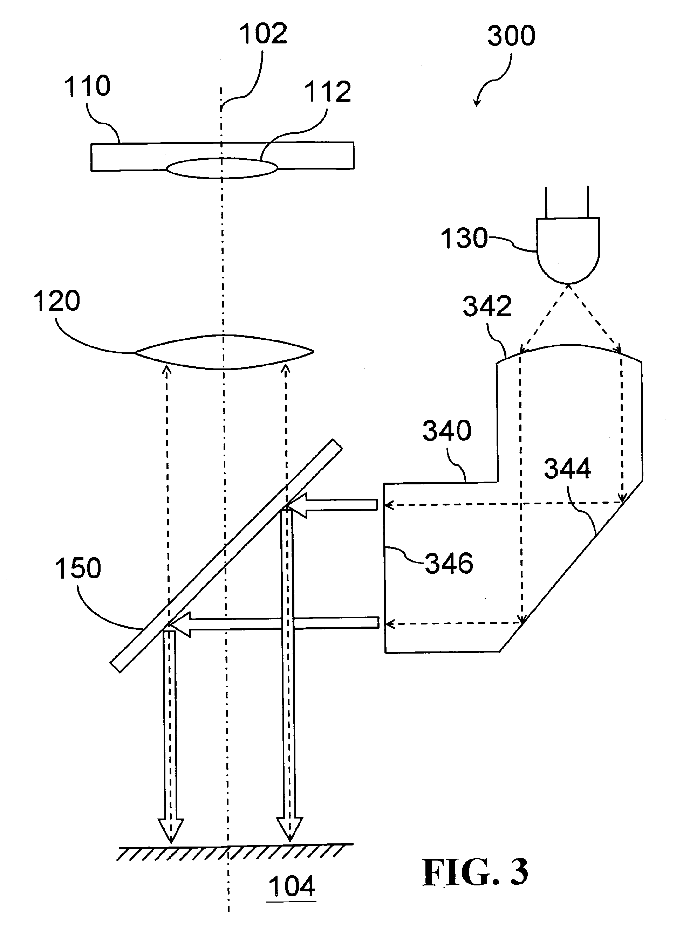

Fig. 3 shows a simplified schematic diagram of a hand-held digital microscope 300 in accordance with a third exemplary embodiment. One major difference between the digital microscope 300 and the digital microscope 200 is in the implementations of the light redirector. A light redirector 340 of the digital microscope 300 is implemented with a substantially transparent light guide. In this embodiment, the light redirector 340 comprises a light receiving surface 342, a reflective area 344, and a light emitting surface 346. Light generated from the luminance device 130 is transmitted to the reflective area 344 through the light receiving surface 342. The light is reflected to the light emitting surface 346 by the reflective area 344, and then transmitted to the beam splitter 150 through the light emitting surface 346. In one embodiment, the light receiving surface 342 of the light redirector 340 has a convex shape capable of converting the light emitted from the luminance device 130 into substantially parallel light and transmitting to the reflective area 344. As a result, the light transmitted from the light redirector 340 toward the beam splitter 150, and the light transmitted from the beam splitter 150 toward the target object 104 are both parallel light. In implementations, the light redirector 340 may be formed integrally with acrylic, glass, or other transparent or translucent materials.

The polarizer sheet 162 and the polarizer sheet 164 in the afore-mentioned embodiment of Fig. 1 may be arranged in the digital microscope 300 is the same way as those in the digital microscope 100, and thus same descriptions will not be repeated for the sake of brevity.

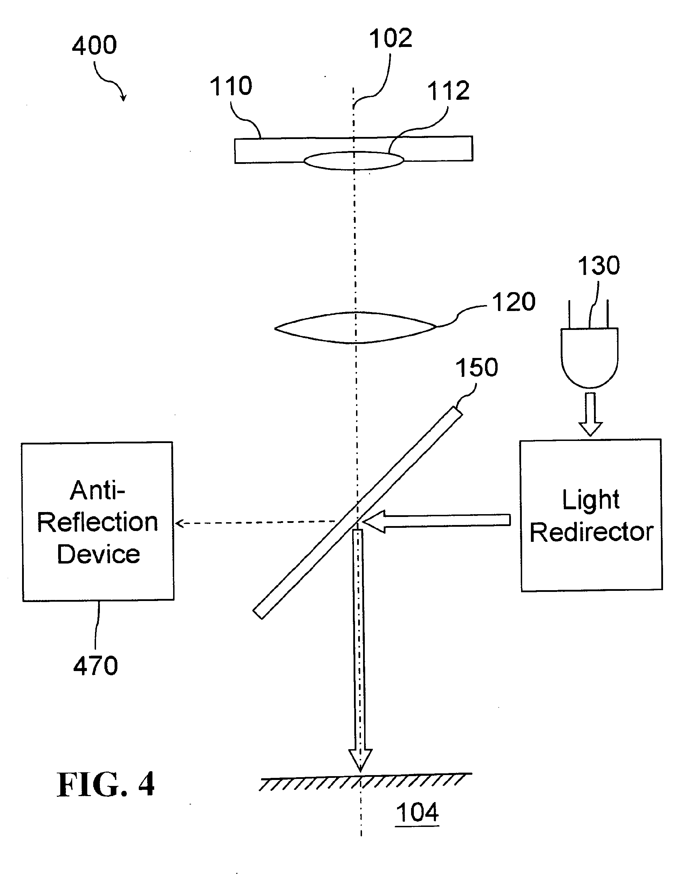

Fig. 4 shows a simplified schematic diagram of a hand-held digital microscope 400 in accordance with a fourth exemplary embodiment. In comparison with the digital microscopes 100∼300 described above, the digital microscope 400 further comprises an anti-reflection device 470 inside its casing. The anti-reflection device 470 is positioned on a side of the beam splitter 150 opposing to the light redirector and receives transmitted light passed through the beam splitter 150. The anti-reflection device 470 is utilized to avoid the transmitted light passed through the beam splitter 150 from being reflected back to the beam splitter 150 by other objects (such as the inner surface of the casing of the digital microscope 400) or to mitigate the above problem. Because the imaging quality of the digital microscope 400 may degrade if the transmitted light passed through the beam splitter 150 is reflected back to the beam splitter 150. In implementations, a light-absorbing layer (such as a piece of flannelette or other materials with low-reflectivity) may be deposed onto the inner surface of the casing of the digital microscope 400 to realize the anti-reflection device 470.

The light redirector and other components of the digital microscope 400 may be implemented in the same way as those in any of the afore-mentioned embodiments, and thus same descriptions will not be repeated for the sake of brevity.

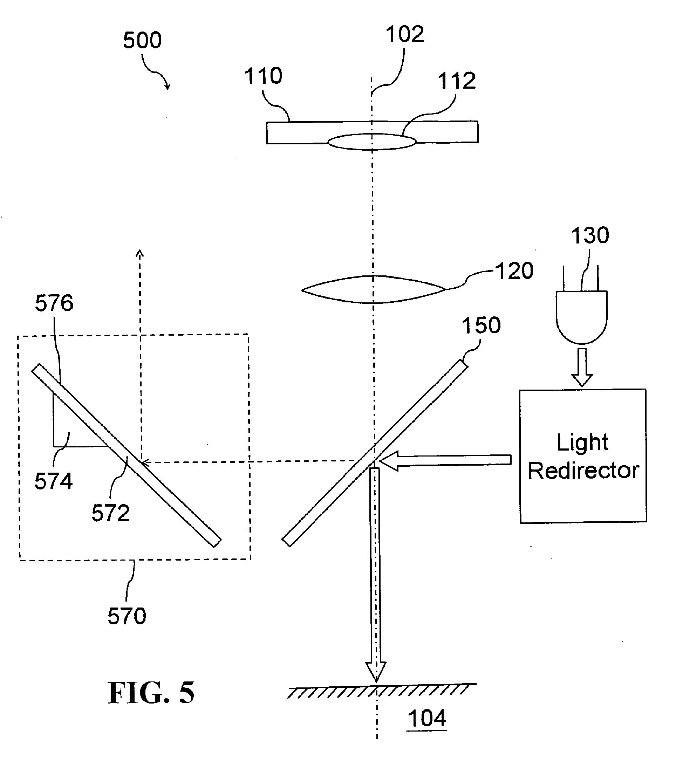

Fig. 5 shows a simplified schematic diagram of a hand-held digital microscope 500 in accordance with a fifth exemplary embodiment. In the embodiment shown in Fig. 5, an anti-reflection device 570 comprises a reflective portion 572 and a securing member 574, wherein the reflective portion 572 is provided with a reflective surface 576. The securing member 574 fixes the reflective portion 572 in a location inside the casing of the digital microscope 500 and corresponding to the beam splitter 150. The securing member 574 also renders the reflective portion 572 to have an appropriate tilting angle so that the reflective surface 576 can reflect transmitted light passed through the beam splitter 150 to a direction other than where the beam splitter 150 is positioned. Preferably, the reflective surface 576 directs the transmitted light passed through the beam splitter 150 to a direction not intersecting with the axis 102.

In another embodiment, a light-absorbing layer (such as a piece of flannelette or other materials with low-reflectivity) may be deposed on the reflective surface 576 of the reflective portion 572 to absorb transmitted light passed through the beam splitter 150. As a result, the possibility of light reflection back to the beam splitter 150 can be reduced.

The light redirector and other components of the digital microscope 500 may be implemented in the same way as those in any of the afore-mentioned embodiments, and thus same descriptions will not be repeated for the sake of brevity.

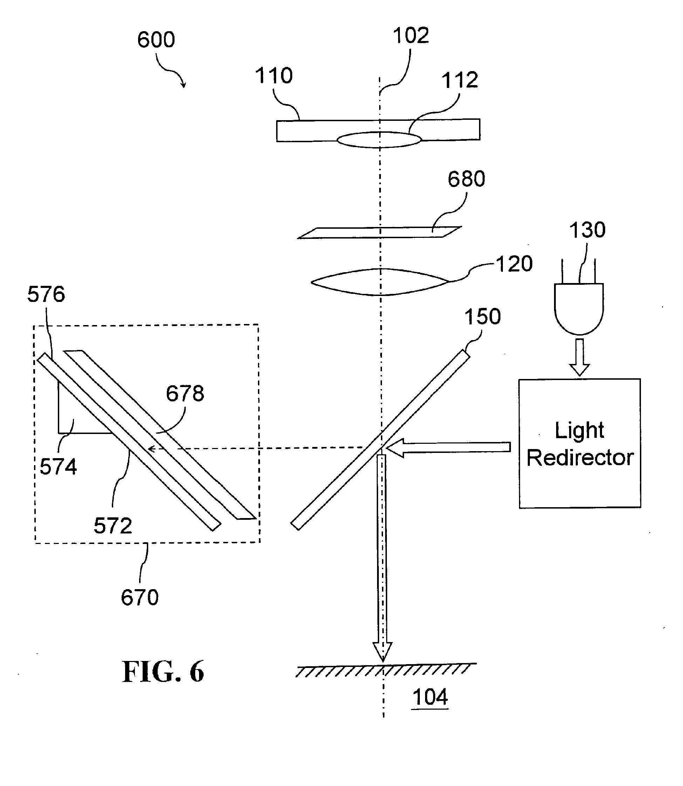

Fig. 6 shows a simplified schematic diagram of a hand-held digital microscope 600 in accordance with a sixth exemplary embodiment. In the digital microscope 600, an anti-reflection device 670 further comprises a polarizer sheet 678 positioned between the reflective surface 576 and the beam splitter 150, such as above the reflective surface 576. In addition, the digital microscope 600 further comprises a polarizer sheet 680 positioned on the optical routing between the beam splitter 150 and the image sensing area 112 along the axis 102, wherein the polarizer sheet 678 has a polarization angle substantially perpendicular to a polarization angle of the polarizer sheet 680. In this way, even if the transmitted light passed through the beam splitter 150 is reflected back to the beam splitter 150 by the other objects, the reflected light would be filtered out due to the optical polarization effect between the polarizer sheet 678 and the polarizer sheet 680. As a result, the imaging quality of the digital microscope 600 can be maintained. In implementations, the polarizer sheet 680 may be arranged between the object lens 120 and the image sensing area 112, or between the object lens 120 and the beam splitter 150. Alternatively, the polarizer sheet 680 may be realized by the polarizer sheet 164 described previously.

The light redirector and other components of the digital microscope 600 may be implemented in the same way as those in any of the afore-mentioned embodiments.

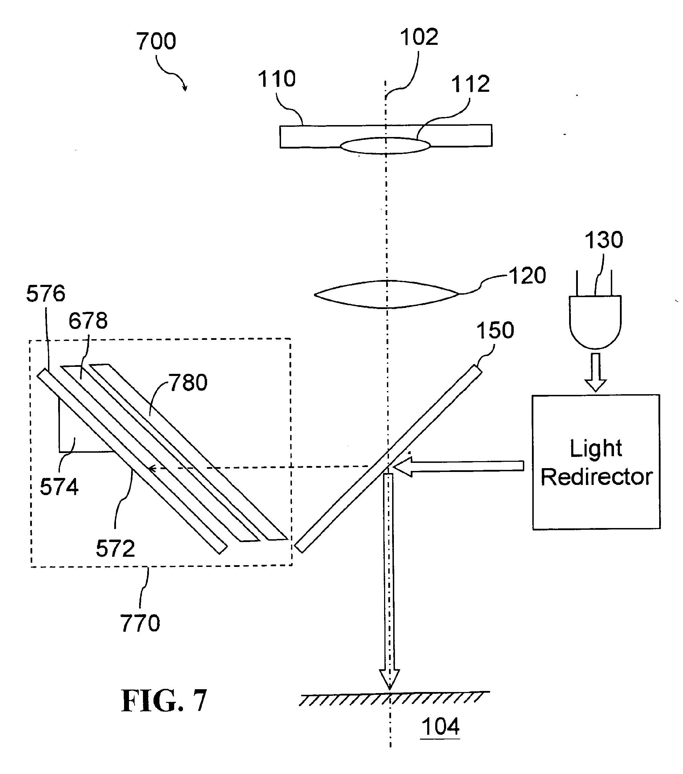

Fig. 7 shows a simplified schematic diagram of a hand-held digital microscope 700 in accordance with a seventh exemplary embodiment. An anti-reflection device 770 of the digital microscope 700 further comprises a polarizer sheet 780 positioned between the polarizer sheet 678 and the beam splitter 150, such as above the polarizer sheet 678. The polarizer sheet 780 has a polarization angle substantially perpendicular to a polarization angle of the polarizer sheet 678. In implementations, spacing elements (not shown) with appropriate size may be disposed between the polarizer sheet 678 and the polarizer sheet 780 so that a small interval exists between the polarizer sheet 678 and the polarizer sheet 780. The operations of the polarizer sheet 678 and the polarizer sheet 780 are similar to the cooperation of the polarizer sheet 678 and the polarizer sheet 680 described previously. Thus, similar descriptions will not be repeated for the sake of brevity.

The light redirector and other components of the digital microscope 700 may be implemented in the same way as those in any of the afore-mentioned embodiments.

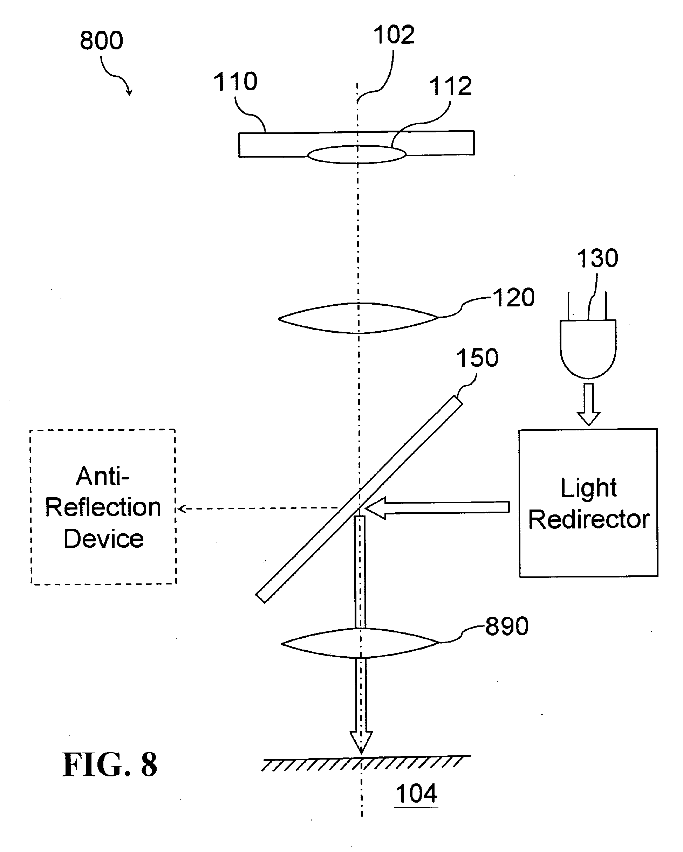

Fig. 8 shows a simplified schematic diagram of a hand-held digital microscope 800 in accordance with an eighth exemplary embodiment. In the digital microscope 800, an additional object lens 890 is aligned with the image sensing area 112 along the axis 102 so that the beam splitter 150 is positioned between the object lens 120 and the object lens 890.

The use of the object lens 890 enables the digital microscope 800 to have more magnification options available for use. In implementations, the object lens 890 and the beam splitter 150 can be configured to have an adjustable interval between them to provide more magnification options for the digital microscope 800. For example, a telescopic tube assembly may be installed inside the casing of the digital microscope 800 so that the magnification or focus of the digital microscope 800 can be adjusted by moving the object lens 890 along the axis 102 inside the telescopic tube assembly. One or more guiding components (such as guiding rod, guiding bar, spiral track, thread or other similar structures) may be employed to engage with the object lens 890 through appropriate connecting structures to allow the object lens 890 to move along the axis 102 by sliding or rotating on the guiding component.

The light redirector, anti-reflection device, and other components of the digital microscope 800 may be implemented in the same way as those in any of the afore-mentioned embodiments, and thus same descriptions will not be repeated for the sake of brevity.

The disclosed embodiments of digital microscopes have practical applications in many fields including, but not limited to, material inspections, medicine-related applications, automotive applications, industrial applications, educational applications, and entertainment applications.

## Claims

1. A digital microscope (100; 200; 300; 400; 500; 600; 700; 800) comprising:
an image sensing circuit (110) having an image sensing area (112) thereon;
a first object lens (120) aligned with the image sensing area (112) along an axis (102);
**characterised by**:
a luminance device (130) positioned outside the axis (102) for emitting light toward a direction that is not coaxial with the axis (102);
a light redirector (140; 240; 340) positioned outside the axis (102) for redirecting the light emitted from the luminance device (130); and
a beam splitter (150) positioned on the axis (102) for changing a direction of light transmitted from the light redirector (140; 240; 340) to provide an output light that is outputted substantially along the axis (102) and coaxial with the axis (102);
wherein the first object lens (120) is positioned between the image sensing area (112) and the beam splitter (150).

2. The digital microscope (100; 200; 300; 400; 500; 600; 700; 800) of claim 1, **characterised in that** an interval between the first object lens (120) and the image sensing area (112) is adjustable.

3. The digital microscope (100; 200; 300; 400; 500; 600; 700; 800) of claim 2, **characterised in that** the first object lens (120) or the image sensing circuit (110) can be moved along the axis (102).

4. The digital microscope (100; 200; 300; 400; 500; 600; 700; 800) of claim 1, **characterised in that** the light transmitted from the light redirector (140; 240; 340) to the beam splitter (130) is a substantially parallel light.

5. The digital microscope (100; 200; 300; 400; 500; 600; 700; 800) of claim 1, **characterised in that** the beam splitter (130) can be moved along the axis (102).

6. The digital microscope (200) of claim 1, **characterised by**:
a convex lens (242) positioned on a side of the beam splitter (150);
wherein the light redirector (240) comprises:
a reflective surface for reflecting light generated from the luminance device (130) to the convex lens (242) and then to the beam splitter (150).

7. The digital microscope (300) of claim 1, **characterised in that** the light redirector (340) comprises:
a substantially transparent light guide comprising a light receiving surface (342), a reflective area (344), and a light emitting surface (346);
wherein the light generated from the luminance device (130) is transmitted to the reflective area (344) through the light receiving surface (342), and then outputted from the light emitting surface (346).

8. The digital microscope (100; 200; 300; 400; 500; 600; 700; 800) of claim 1, **characterised by**:
a first polarizer sheet (162) positioned on an optical routing between the luminance device (130) and the beam splitter (150); and
a second polarizer sheet (164) positioned on an optical routing between the beam splitter (150) and the image sensing area (112) along the axis (102);
wherein the first polarizer sheet (162) has a polarization angle substantially perpendicular to a polarization angle of the second polarizer sheet (164).

9. The digital microscope (100; 200; 300; 400; 500; 600; 700; 800) of claim 8, **characterised in that** the first polarizer sheet (162) can be moved to outside the optical routing between the luminance device (130) and the beam splitter (150), and/or the second polarizer sheet (164) can be moved to outside the axis (102).

10. The digital microscope (400; 500; 600; 700) of claim 1 or 8, **characterised by**:
an anti-reflection device (470; 570; 670; 770), positioned on a side of the beam splitter (150) opposing to the light redirector (140; 240; 340), for receiving transmitted light passed through the beam splitter (150).

11. The digital microscope (500; 600; 700) of claim 10, **characterised in that** the anti-reflection device (570; 670; 770) comprises a reflective surface (576) for reflecting the transmitted light to a direction other than where the beam splitter (150) is positioned.

12. The digital microscope (600; 700) of claim 11, **characterised in that** the anti-reflection device (670; 770) further comprises:
a third polarizer sheet (678) positioned between the reflective surface (576) and the beam splitter (150).

13. The digital microscope (600; 700) of claim 12, **characterised by**:
a fourth polarizer sheet (680; 780) positioned between the third polarizer sheet (678) and the beam splitter (150) or positioned on an optical routing between the beam splitter (150) and the image sensing area (112),
wherein the fourth polarizer sheet (680; 780) has a polarization angle substantially perpendicular to a polarization angle of the third polarizer sheet (678).

14. The digital microscope (400; 500; 600; 700) of claim 10, **characterised in that** the anti-reflection device (470; 570; 670; 770) comprises a light-absorbing layer for absorbing the transmitted light.

15. The digital microscope (800) of claim 1, 8, or 10, **characterised by**:
a second object lens (890) aligned with the image sensing area (112) along the axis (102);
wherein the beam splitter (150) is positioned between the first object lens (120) and the second object lens (890).
